# EUROPÄISCHE PATENTANMELDUNG

(11) **EP 1 652 568 A2**
(43) Veröffentlichungstag der Anmeldung: **03.05.2006**
(21) Anmeldenummer: 05108179.2
(22) Anmeldetag: 07.09.2005
(51) Int. Cl.: B01D 46/08, B01D 46/24, F01N 3/021

(54) **Filtereinrichtung, insbesondere Partikelfilter für ein Abgassystem einer Brennkraftmaschine**

(30) Priorität: 27.10.2004 DE 102004052188
(71) Anmelder: ROBERT BOSCH GMBH, 70442 Stuttgart (DE)
(72) Erfinder: FRISSE, Hans-Peter, 52134 Herzogenrath (DE)

(57) **Zusammenfassung**

Eine Filtereinrichtung (14), insbesondere ein Partikelfilter für ein Abgassystem einer Brennkraftmaschine, filtert Partikel aus einem Gasstrom und umfasst eine Filterstruktur (18) mit einer Mehrzahl von Filtertaschen (22). Diese sind jeweils von mindestens einer Filterwand (24) begrenzt. Es wird vorgeschlagen, dass mindestens eine Filterwand (24) wenigstens bereichsweise doppelwandig mit einem ersten gasdurchlässigen Wandabschnitt (26) und einem diesem gegenüberliegenden zweiten gasdurchlässigen Wandabschnitt (28) ist, und dass ein erster Zwischenraum (30) zwischen den beiden Wandabschnitten (26, 28) entweder Teil eines stromaufwärts von der Filterstruktur liegenden Strömungsbereichs oder Teil eines stromabwärts von der Filterstruktur (18) liegenden Strömungsbereichs (48) ist.

## Beschreibung

### Stand der Technik

Die Erfindung betrifft eine Filtereinrichtung, insbesondere einen Partikelfilter für ein Abgassystem einer Brennkraftmaschine, welche Partikel aus einem Gasstrom herausfiltert, mit einer Filterstruktur mit einer Mehrzahl von Filtertaschen, die jeweils von mindestens einer Filterwand begrenzt sind.

Eine Filtereinrichtung der eingangs genannten Art ist aus der DE 102 23 452 A1 bekannt. Bei der dort gezeigten Filtereinrichtung (vgl. vorliegende Figur 1) handelt es sich um einen Partikelfilter für ein Abgassystem einer Diesel-Brennkraftmaschine. Die Filterwände 1 bei der bekannten Filtereinrichtung sind aus Sintermetall hergestellt und so angeordnet, dass keilförmige Filtertaschen 2 gebildet werden. Die spitz zulaufenden Keilkanten 3 der Filtertaschen 2 zeigen entgegen der Strömungsrichtung des Abgases, die in Strömungsrichtung gesehen hintere Schmalseite 4 einer Filtertasche 2 ist offen. Die Filtertaschen 2 sind nebeneinander angeordnet.

Im Betrieb tritt das Abgas durch die Seitenwände 1 der Filtertaschen 2 hindurch, wobei Partikel zurückgehalten werden.

Aufgabe der vorliegenden Erfindung ist es, eine Filtereinrichtung der eingangs genannten Art so weiterzubilden, dass bei gleichen äußeren Abmessungen die Filterleistung verbessert, oder bei gleicher Filterleistung die äußeren Abmessungen reduziert werden können.

Diese Aufgabe wird bei einer Filtereinrichtung der eingangs genannten Art dadurch gelöst, dass mindestens eine Filterwand wenigstens bereichsweise doppelwandig mit einem ersten gasdurchlässigen Wandabschnitt und einem diesem gegenüberliegenden zweiten gasdurchlässigen Wandabschnitt ist, und dass ein erster Zwischenraum zwischen den beiden Wandabschnitten entweder Teil eines stromaufwärts von der Filterstruktur liegenden Strömungsbereichs oder Teil eines stromabwärts von der Filterstruktur liegenden Strömungsbereichs ist.

### Vorteile der Erfindung

Durch die vorgeschlagene Filtereinrichtung mit doppelwandigen Begrenzungen der Filtertaschen kann die zur Verfügung stehende Filterfläche bei gegebenen äußeren Abmessungen nahezu verdoppelt werden. Dabei kann die Anzahl der Filtertaschen beibehalten werden, so dass kein größerer Fertigungs- bzw. Herstellaufwand vorliegt. Umgekehrt können bei gegebener Filterleistung die äußeren Abmessungen und/oder die Anzahl der Filtertaschen reduziert werden, wodurch zum einen Bauraum gespart und zum anderen der Montageaufwand gesenkt werden kann. Dies führt wiederum zu einer Kostenreduktion.

Vorteilhafte Weiterbildungen der vorliegenden Erfindung sind in Unteransprüchen angegeben.

Vorgeschlagen wird beispielsweise, dass zwischen benachbarten Filtertaschen ein zweiter Zwischenraum vorhanden ist, welcher Teil jenes Strömungsbereichs ist, zudem die ersten Zwischenräume nicht gehören. Dies vereinfacht die Installation und reduziert die Anzahl der erforderlichen Filtertaschen. Letztlich werden hierdurch die Herstellkosten gesenkt.

Vorteilhaft ist auch, wenn die einander gegenüberliegenden Wandabschnitte einer Filtertasche an mindestens einem Rand miteinander verschweißt sind. Hierdurch wird ein eigenstabiler Verbund geschaffen, der bei der Montage leicht handhabbar ist.

Eine besonders bevorzugte Ausgestaltung der erfindungsgemäßen Filtereinrichtung zeichnet sich dadurch aus, dass eine Filtertasche eine Außentasche und eine Innentasche umfasst, durch die die einander gegenüberliegenden Wandabschnitte gebildet werden. Auch hierdurch wird die Herstellung der erfindungsgemäßen Filtereinrichtung vereinfacht, was letztendlich die Herstellkosten senkt.

In dem ersten Zwischenraum zwischen den beiden Wandabschnitten einer Filterwand kann ein Funktionselement, insbesondere ein Abstandshalter, angeordnet sein. Dies gestattet die Verwendung dünner Wandabschnitte, bei trotzdem ausreichender Stabilität der Filtereinrichtung.

Möglich ist, dass die einander gegenüberliegenden Wandabschnitte mindestens einer Filterwand zueinander wenigstens in etwa planparallel sind. Dies ist eine einfache Ausführungsform, die preiswert hergestellt werden kann. Dies gilt insbesondere bei der Verwendung der o. g. Funktionselemente, welche in diesem Fall sehr einfach ausgeführt sein können.

Möglich ist aber auch, dass die einander gegenüberliegenden Wandabschnitte mindestens einer Filterwand voneinander einen in mindestes einer Raumrichtung veränderlichen Abstand aufweisen. Dies gestattet die Realisierung komplexer Gesamtformen der Filtereinrichtung, beispielsweise die Realisierung einer ringförmigen Filtereinrichtung. Eine solche Filtereinrichtung kann gut an gegebene Einbauverhältnisse bei einer Brennkraftmaschine angepasst werden.

Zur Abdichtung des stromabwärts liegenden Strömungsbereichs gegenüber dem stromaufwärts liegenden Strömungsbereichs kann ein Dichtflansch vorgesehen sein. Dies vereinfacht die erforderliche Geometrie der einzelnen Filtertaschen, was wiederum die Montage vereinfacht und die Herstellkosten senkt.

### Zeichnungen

Nachfolgend werden besonders bevorzugte Ausführungsbeispiele der vorliegenden Erfindung unter Bezugnahme auf die beiliegende Zeichnung näher erläutert. In der Zeichnung zeigen:
- Figur 1: eine schematische Draufsicht senkrecht zur Strömungsrichtung auf eine aus dem Stand der Technik bekannte Filtereinrichtung mit drei Filtertaschen;
- Figur 2: eine schematische Darstellung einer Diesel-Brennkraftmaschine mit einer erfindungsgemäßen Rußpartikel-Filtereinrichtung;
- Figur 3: eine Darstellung ähnlich Figur 1 der Filtereinrichtung von Figur 2;
- Figur 4: eine perspektivische Darstellung in Strömungsrichtung gesehen einer alternativen Ausführungsform einer Filtertasche mit einer Innentasche und einer Außentasche;
- Figur 5: eine perspektivische Darstellung entgegen der Strömungsrichtung gesehen von zwei nochmals anders ausgeführten Filtertaschen;
- Figur 6: einen Schnitt durch die Anordnung von Figur 5; und
- Figur 7: eine perspektivische Darstellung einer weiteren Aufführungsform einer Filtertasche mit einem Abstandshalter.

### Beschreibung der Ausführungsbeispiele

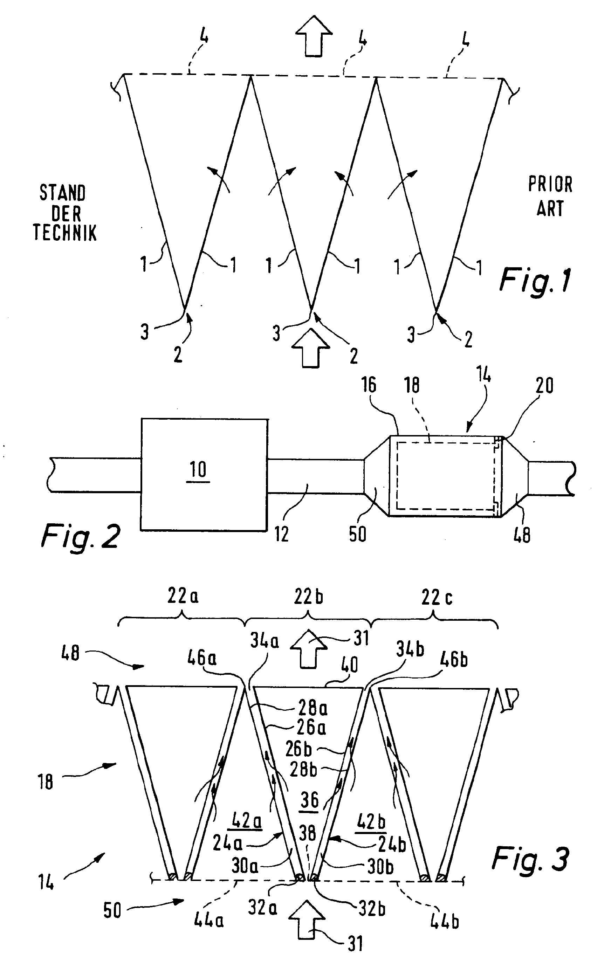

In Figur 2 ist eine Diesel-Brennkraftmaschine 10 symbolisch als Rechteck dargestellt. Heiße Verbrennungsabgase werden von der Brennkraftmaschine 10 über ein Abgasrohr 12 einer Filtereinrichtung 14 zugeführt. In dieser werden im heißen Abgas enthaltene Rußpartikel herausgefiltert. Die Filtereinrichtung 14 umfasst ein Gehäuse 16, in dem eine Filterstruktur 18 angeordnet ist. Diese ist mittels eines Dichtflansches 20 gegenüber dem Gehäuse 16 abgedichtet.

Wie aus Figur 3 hervorgeht, umfasst die Filterstruktur 18 mehrere in der Draufsicht von oben insgesamt trapezförmige Filtertaschen 22a, 22b, 22c. Die einzelnen Filtertaschen 22a - 22c sind identisch aufgebaut, so dass aus Gründen der Übersichtlichkeit in Figur 3 die einzelnen Komponenten im Wesentlichen nur für die Filtertasche 22b mit Bezugszeichen versehen sind. Die nachfolgenden Ausführungen gelten somit in gleicher Weise auch für die Filtertaschen 22a und 22c.

Die Filtertasche 22b hat in der Draufsicht eine linke Filterwand 24a und eine rechte Filterwand 24b. Die linke Filterwand 24a umfasst wiederum einen ersten Wandabschnitt 26a, dem ein zweiter Wandabschnitt 28a planparallel gegenüberliegt. Die Wandabschnitte 26a und 28a sind aus einem dünnen blattartigen Material ("sheet") hergestellt, beispielsweise einem Sintermetall. Zwischen den beiden Wandabschnitten 26a und 28a ist ein erster Zwischenraum 30a gebildet, dessen stromaufwärts zur Brennkraftmaschine 10 zeigendes Ende (die Strömungsrichtung ist in Figur 3 durch Pfeile 31 angedeutet) durch eine Schweißnaht 32a verschlossen ist, und dessen in Strömungsrichtung gesehen anderes Ende offen ist (Bezugszeichen 34a).

Analog hierzu umfasst die rechte Filterwand 24b der Filtertasche 22a einen ersten Wandabschnitt 26b und einen zweiten Wandabschnitt 28b, zwischen denen ebenfalls ein erster Zwischenraum 30b vorhanden ist. Dieser ist wiederum durch eine Schweißnaht 32b nach stromaufwärts abgedichtet und ist an seinem entgegengesetzten Ende (Bezugszeichen 34b) offen. Ein Innenraum 36 der Filtertasche 22a, der zwischen den beiden Filterwänden 24a und 24b gebildet ist, ist an seinem stromaufwärts liegenden Ende offen (Bezugszeichen 38) und an seinem stromabwärts gelegenen Ende (Bezugszeichen 40) geschlossen.

Zwischen zwei benachbarten Filtertaschen 22a und 22b bzw. 22b und 22c ist jeweils ein zweiter Zwischenraum 42a bzw. 42b vorhanden, dessen stromaufwärts gelegenes Ende 44a bzw. 44b offen und dessen stromabwärts gelegenes Ende 46a bzw. 46b geschlossen ist. Aufgrund der in der in Figur 3 gezeigten Draufsicht trapezförmigen Geometrie der Filtertaschen 22a - 22c sind die Innenräume 36 der Filtertaschen 22a - 22c ebenfalls trapezförmig, wohingegen die zwischen den Filtertaschen 22a und 22b bzw. 22b und 22c gelegenen zweiten Zwischenräume 42a und 42b eine dreieckige Grundform haben.

Der Strömungsweg des Abgases verläuft durch die in den Figuren 2 und 3 gezeigte Filtereinrichtung 14 wie folgt:

Über die Öffnungen 44a und 44b der zweiten Zwischenräume 42a und 42b gelangt der Abgasstrom zwischen die Filtertaschen 22a - 22c. Durch die Öffnung 38 des Innenraums 36 gelangt der Abgasstrom auch in den Innenraum 36 der Filtertasche 22b. Die einzelnen Wandabschnitte 26a und 26b sowie 28a und 28b sind gasdurchlässig, beispielsweise aus einer Siliziumkarbitkeramik, hergestellt. Somit tritt das Abgas von den zweiten Zwischenräumen 42a und 42b über die Wandabschnitte 28a und 28b in den entsprechenden ersten Zwischenraum 30a und 30b ein.

Darüber hinaus gelangt das Abgas auch durch die zweiten Wandabschnitte 26a und 26b aus dem Innenraum 36 der Filtertasche 22b in diesen ersten Zwischenraum 30a bzw. 30b. Beim Durchtritt durch die Wandabschnitte 26a und 26b bzw. 28a und 28b werden im Abgas vorhandene Rußpartikel zurückgehalten und an den entsprechenden Wandabschnitten 26a, 26b, 28a, 28b abgelagert. Der gereinigte Abgasstrom strömt über die ersten Zwischenräume 30a und 30b und die Öffnungen 34a und 34b ab.

In dem in Figur 3 gezeigten Ausführungsbeispiel sind die ersten Zwischenräume 30a und 30b, die zwischen den beiden Wandabschnitten 26a und 28a bzw. 26b und 28b gebildet sind, somit Teil des stromabwärts von der Filterstruktur 18 liegenden Strömungsbereichs, der in den Figuren 2 und 3 mit dem Bezugszeichen 48 versehen ist. Ein stromaufwärts von der Filterstruktur 18 gelegener Strömungsbereich trägt dagegen das Bezugszeichen 50. Zu diesem wiederum gehören die zweiten Zwischenräume 42a und 42b, sowie die Innenräume 36.

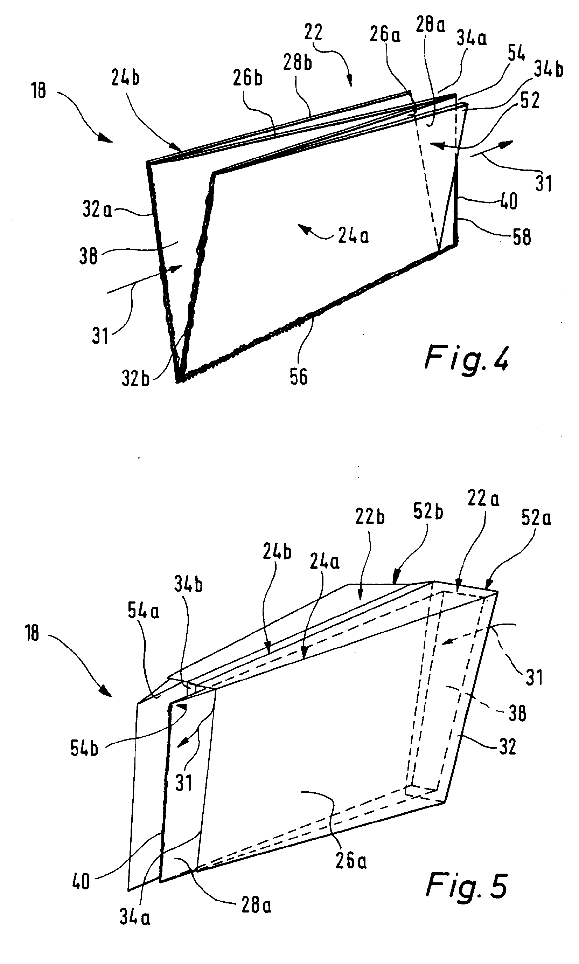

In den Figuren 4 - 6 ist eine alternative Ausführungsform einer Filterstruktur 18 gezeigt. Dabei tragen hier und nachfolgend solche Elemente und Bereiche, welche äquivalente Funktionen zu Elementen und Bereichen eines vorhergehenden Ausführungsbeispiels aufweisen, die gleichen Bezugszeichen. Sie sind nicht nochmals im Detail erläutert.

In Figur 4 ist eine Filtertasche 22 in Strömungsrichtung gesehen gezeigt. Sie umfasst eine Außentasche 52 und eine Innentasche 54. Die Außentasche ist in Strömungsrichtung gesehen im Querschnitt in etwa dreieckig, wobei der Öffnungswinkel am stromaufwärts gelegenen Ende 38 in etwa gleich dem Öffnungswinkel am stromabwärts gelegenen Ende 40 ist. Im Bereich des stromaufwärts gelegenen Endes sind die querverlaufenden Ränder durch Schweißnähte 32a und 32b miteinander verbunden. Ebenso sind die in Figur 4 unteren Längsränder der Außentasche 52 und der Innentasche 54 durch eine Schweißnaht 56 miteinander verbunden. Die Innentasche 54 verjüngt sich in Strömungsrichtung gesehen. An ihrem stromabwärts gelegenen Ende sind die Querränder der beiden Wandabschnitte 26b und 28b miteinander in 58 verschweißt.

Bei dieser Ausführungsform sind die Wandabschnitte 26a und 28a bzw. 26b und 28b also nicht planparallel, sondern weisen einen in zwei Raumrichtungen veränderlichen Abstand voneinander auf.

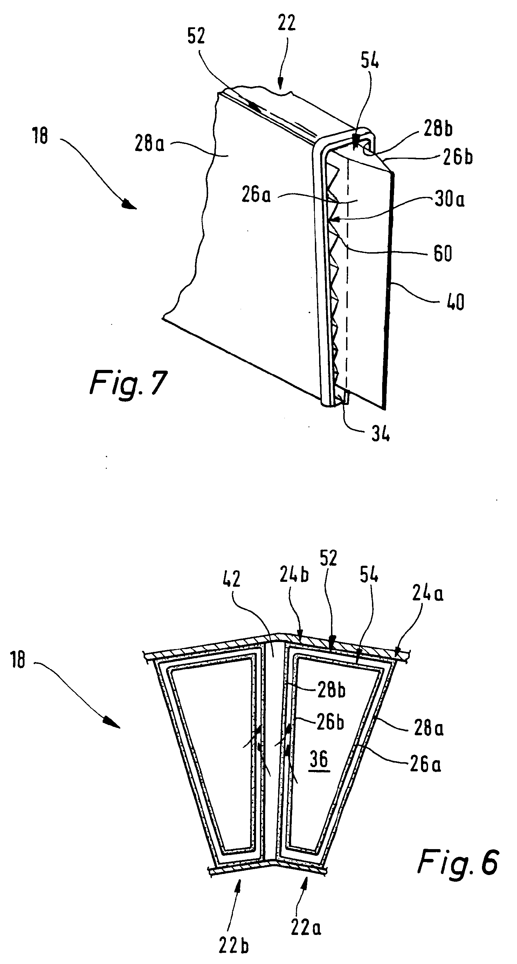

Die in den Figuren 5 und 6 gezeigte Ausführungsform einer Filtereinrichtung 14 bzw. Filterstruktur 18 ist ähnlich aufgebaut wie jene von Figur 4, wobei jedoch die Innentasche 54 und die Außentasche 52 in Strömungsrichtung gesehen einen trapezförmigen Querschnitt aufweisen. Dies ist besonders gut auch aus dem Querschnitt von Figur 6 ersichtlich. Man erkennt, dass durch die nebeneinander angeordneten Filtertaschen 22a und 22b, usw., eine insgesamt ringförmige Filterstruktur 18 geschaffen werden kann.

Bei der in Figur 7 gezeigten Filterstruktur 18 ist im ersten Zwischenraum 30a zwischen dem ersten Wandabschnitt 26a und dem zweiten Wandabschnitt 28a ein Funktionselement in Form eines wellenförmigen Abstandshalters 60 eingeführt. Dieses auch als "Spacer" bezeichnete Element sorgt dafür, dass im Betrieb der Filtereinrichtung 14 durch den Strömungsdruck der erste Zwischenraum 30a erhalten bleibt, so dass das gereinigte Abgas problemlos abströmen kann. Es versteht sich, dass ein solcher Abstandshalter auch in dem in Figur 7 nicht sichtbaren ersten Zwischenraum auf der anderen Seite der Innentasche 55 vorhanden ist.

## Patentansprüche

1. Filtereinrichtung (14), insbesondere Partikelfilter für ein Abgassystem einer Brennkraftmaschine (10), welche Partikel aus einem Gasstrom herausfiltert, mit einer Filterstruktur (18) mit einer Mehrzahl von Filtertaschen (22), die jeweils von mindestens einer Filterwand (24) begrenzt sind, **dadurch gekennzeichnet, dass** mindestens eine Filterwand (24) wenigstens bereichsweise doppelwandig mit einem ersten gasdurchlässigen Wandabschnitt (26) und einem diesem gegenüber liegenden zweiten gasdurchlässigen Wandabschnitt (28) ist, und dass ein erster Zwischenraum (30) zwischen den beiden Wandabschnitten (26, 28) entweder Teil eines stromaufwärts von der Filterstruktur liegenden Strömungsbereichs oder Teil eines stromabwärts von der Filterstruktur (18) liegenden Strömungsbereichs (48) ist.

2. Filtereinrichtung (14) nach Anspruch 1, **dadurch gekennzeichnet, dass** zwischen benachbarten Filtertaschen (22) ein zweiter Zwischenraum (42) vorhanden ist, welcher Teil jenes Strömungsbereichs (50) ist, zu dem die ersten Zwischenräume (30) nicht gehören.

3. Filtereinrichtung (14) nach einem der Ansprüche 1 oder 2, **dadurch gekennzeichnet, dass** die einander gegenüber liegenden Wandabschnitte (26, 28) einer Filtertasche (22) an mindestens einem Rand miteinander verschweißt sind (32; 56, 58).

4. Filtereinrichtung (14) nach einem der vorhergehenden Ansprüche, **dadurch gekennzeichnet, dass** eine Filtertasche (22) eine Außentasche (52) und eine Innentasche (54) umfasst, durch die die einander gegenüberliegenden Wandabschnitte (26, 28) gebildet werden.

5. Filtereinrichtung (14) nach einem der vorhergehenden Ansprüche, **dadurch gekennzeichnet, dass** in dem ersten Zwischenraum (30) zwischen den beiden Wandabschnitten (26, 28) einer Filterwand (22) ein Funktionselement, insbesondere ein Abstandshalter (60), angeordnet ist.

6. Filtereinrichtung (14) nach einem der vorhergehenden Ansprüche, **dadurch gekennzeichnet, dass** die einander gegenüber liegenden Wandabschnitte (26, 28) mindestens einer Filterwand (22) zueinander wenigstens in etwa planparallel sind.

7. Filtereinrichtung (14) nach einem der vorhergehenden Ansprüche, **dadurch gekennzeichnet, dass** die einander gegenüberliegenden Wandabschnitte (26, 28) mindestens einer Filterwand (22) voneinander einen in mindestens einer Raumrichtung veränderlichen Abstand aufweisen.

8. Filtereinrichtung (14) nach einem der vorhergehenden Ansprüche, **dadurch gekennzeichnet, dass** zur Abdichtung des stromabwärts liegenden Strömungsbereichs (48) gegenüber dem stromaufwärts liegenden Strömungsbereich (50) ein Dichtflansch (20) vorhanden ist.
